# EUROPEAN PATENT SPECIFICATION

(11) **EP 3 295 073 B1**
(45) Date of publication and mention of the grant of the patent: **20.02.2019**
(21) Application number: 16726806.9
(22) Date of filing: 16.05.2016
(51) Int. Cl.: F17C 5/02

(54) **DISTRIBUTION STATION FOR CRYOGENIC LIQUID**
VERTEILERSTATION FÜR KRYOGENE FLÜSSIGKEIT
STATION DE DISTRIBUTION POUR LIQUIDE CRYOGÉNIQUE

(30) Priority: 15.05.2015 FR 1554382
(43) Date of publication of application: 21.03.2018
(73) Proprietor: Cryostar SAS, 68220 Hesingue (FR)
(72) Inventor: OURY, Simon, 68300 Saint Louis (FR)
(74) Representative: Richmond, Sarah
(86) International application number: PCT/EP2016/060940
(87) International publication number: WO 2016/184826

(56) References cited:
- EP-A1- 1 333 007
- EP-A1- 1 544 159
- EP-A1- 1 932 802
- WO-A1-2013/059586
- GB-A- 2 437 446
- JP-A- H1 024 996
- JP-A- H07 257 695
- US-A1- 2014 261 867

## Description

The present invention relates to a distribution station for cryogenic liquid.

The present invention relates more particularly to the distribution of cryogenic liquid, for example, Liquefied Natural Gas (LNG), hydrogen or liquid nitrogen. Such liquids are typically delivered pressurized and at very low temperatures.

The number of users of LNG is on the rise and the number of LNG transfers, for example, into tanks of vehicles usually of the truck or van type, continues to increase. To carry out this type of transfer, a distribution device is used for transferring the quantity of cryogenic liquid from a stationary storage device to a tank or other container of lesser size.

The known systems for distributing LNG conventionally have a flexible filling pipe and optionally a vapor collection pipe that is also flexible. They are also provided with various safety devices such as an emergency stop button, a push button referred to as "dead man's" push button and also a start button, which has to be actuated to enable the delivery of cryogenic liquid. In addition, a screen makes it possible to display information on the transferred cryogenic liquid.

Closest prior art, upon which the preamble of claim 1 is based, is patent application US2014/0261867A1, which discloses a distribution station for a cryogenic liquid comprising a monitoring screen, at least one control button arranged in a manner that it is accessible to a person facing the screen, and a filling pipe.

Conventionally, a distribution station for cryogenic liquid looks like a gasoline distribution station. It usually has a substantially parallelepiped body with a height of approximately 2 m and a surface provided with a monitoring screen below which are located a start button, a so-called "dead man's" button, and an emergency stop button as well as, in general, indicator lights providing information on the ongoing distribution process. The filling pipe comes out through a surface adjacent to the surface provided with the monitoring screen. The vapor collection pipe is arranged either on the side of the filling pipe or on the surface opposite from the surface through which the filling pipe exits. In the latter case, a surface adjacent to the surface receiving the monitoring screen receives the filling pipe, while the other adjacent surface receives the venting pipe.

The aim of the present invention is to provide a distribution station of the type described above, with a filling pipe, a venting pipe, a monitoring screen and safety means, which has improved ergonomics.

To this effect, the invention proposes a distribution station for cryogenic liquid, comprising a monitoring screen, at least one control button arranged in a manner that it is accessible to a person facing the screen, and a filling pipe which extends from the distribution station.

According to the present invention, the filling pipe extends out of the station from a surface referred to as the rear surface of the distribution station; the monitoring screen is arranged substantially parallel to the rear surface and oriented away from this rear surface.

In this manner, the pipes of the station are located on one side of said station, while the monitoring screen is located on the opposite side. Thus, during a filling operation, when the filling pipe is connected to the tank that the operator wishes to fill, he maintains the control over the filling operation by simultaneously observing the screen and the connection between the pipe and the tank.

To further improve the ergonomics of the distribution station, all the control buttons are advantageously grouped together.

In order to facilitate the use of the distribution station, it preferably comprises only one button for controlling the filling sequence, which is associated with distribution means of the electric valve and/or pump type, as well as control means such that, when the button is released, the distribution means are at rest, whereas, when the button is pressed, the distribution means supply the filling pipe with cryogenic liquid according to said sequence.

A preferred embodiment provides for the distribution station to be such that the rear surface has an upper rim provided with a coupler that receives a proximal end of the filling pipe and with a coupler that receives a proximal end of a vapor collection pipe, the couplers being implemented so that the proximal end of the filling pipe and the proximal end of the vapor collecting pipe extend substantially vertically. In this embodiment, the pipes are less heavy to handle for the user. In this embodiment, one can also provide that the filling pipe and the vapor collection pipe are each equipped at their distal end with a connector, and that the front surface comprises two accommodations, one for each of said connectors, each accommodation having a substantially cylindrical shape and being oriented downward at a (downward) inclination angle between 0 and 45°. Each accommodation can then be provided with a locking device making it possible to maintain a connector inside the accommodation thereof, and/or the accommodation of the filling pipe can be provided with heating and/or cleaning means.

A preferred embodiment provides that the distribution station comprises:
- a lower base having a height between 0.8 and 1.3 m with a first surface referred to as lower rear surface, a second surface referred to as lower front surface, a third surface referred to as upper surface, and two surfaces referred to as lower side surfaces,
- a pillar extending vertically from the upper surface and having a surface that extends the lower rear surface of the lower base towards the top, and
- an awning that is supported by the pillar and extends from said pillar towards the front and towards the rear, so as to form a rim towards the rear, and a roof covering the lower base towards the front.

This distribution station is moreover advantageously such that the roof covering the lower base supports a housing with a surface referred to as upper front surface in which the monitoring screen is inserted and provides that a free space is formed between said housing and the upper surface of the lower base. In this manner, the screen is thermally protected from the cold elements of the distribution station. Said space can also be used to receive various objects. Finally, in order to have the buttons close to the screen and thus to further improve the ergonomics of the distribution station, it is possible to provide that the lower front surface has an inclined plane adjacent to the upper surface of the lower base and that the control buttons of the distribution station are grouped together therein.

Details and advantages of the present invention will become clearer in the following description provided in reference to the appended diagrammatic drawing in which:
Figure 1 is a diagrammatic top view of an ergonomic distribution station for cryogenic liquid, in a phase of connection of the station to a tank of a truck,
Figure 2 is a view corresponding to that of Figure 1, during a filling phase,
Figure 3 is an isometric perspective view of a preferred embodiment of a distribution station,
Figure 4 shows the distribution station of Figure 3 in an elevation view seen from the side,
Figure 5 is a front view of the distribution station of Figures 3 and 4, and
Figure 6 is a rear view of the distribution station of Figures 3 to 5.

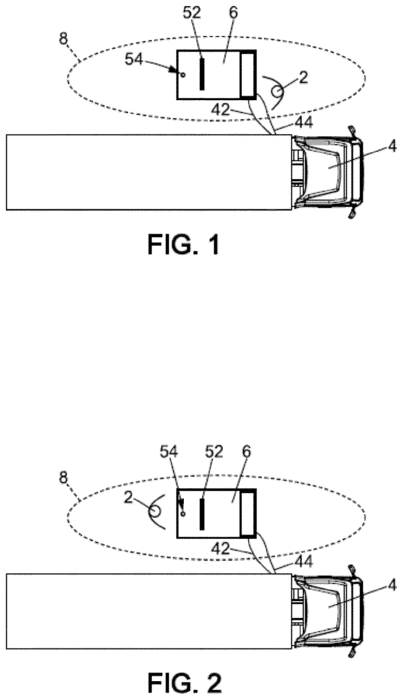

Figures 1 and 2 are diagrammatic views representing an operator 2 during the refueling of his truck 4 at a distribution station 6 for cryogenic liquid.

The distribution station 6 is arranged on an island 8, which may be of any elongate shape, the figures suggesting an elliptic shape. This island 8 is slightly raised, for example, approximately 15 to 30 cm above the pavement on which the vehicles are driven to have their tanks refueled with cryogenic liquid at the distribution station. The island 8 thus delimits an area which is prohibited to vehicles and for welcoming the operator 2 while he is refilling the tank. The operator 2 can safely move around the distribution station 6 while remaining on the island 8.

In the continuation of the description, an orientation will be adopted that is derived from the position of the operator in Figure 2. Here, it is assumed that the operator 2, during a sequence of distribution of cryogenic liquid, faces the front surface of the distribution station 6. As a result, in Figures 1 and 2 (and also 4) the front is on the left, while that rear is on the right. An upper/lower orientation as well as a horizontal direction and a vertical direction are naturally defined in the same way. The pavement and the island 8 have a substantially horizontal surface.

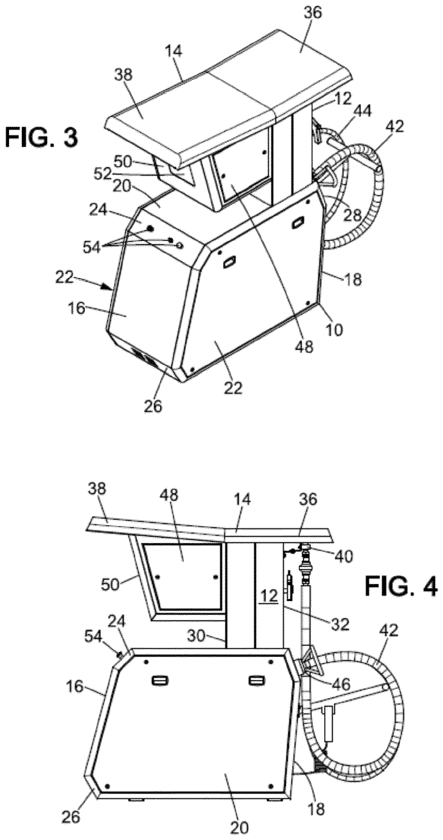

The distribution station 6 of Figures 1 and 2 is illustrated in greater detail in a preferred embodiment in Figures 3 to 6.

The distribution station 6 has an original shape specified below. It includes a base 10, or lower base, and a pillar 12 supporting an awning 14.

The base 10 contains electromechanical elements and pipes for the distribution of cryogenic liquid. These various elements are known to the person skilled in the art and not described here. For example, they can consist of a pump and/or of an electric valve which is/are associated with a feed pipe and with a pipe for delivering cryogenic liquid. All these technical elements are covered and together they form the base 10 which has a lower front surface 16, a lower rear surface 18, an upper surface 20, and two side surfaces 22.

As can be seen better in Figure 4, the lower front surface 16 is slightly inclined so that the upper edge thereof is advanced relative to the lower edge thereof. One also notes in Figure 4, that the lower front surface 16 also has a strip 24 at the top which, like a bevel, forms the connection with the upper surface, and an inclined corner angle 26 which supports an aeration grate in the lower portion.

The lower rear surface 18 extends substantially vertically over most of the height thereof and ends at the upper portion with an area 28 inclined towards the front to establish the connection with the upper surface 20.

The upper surface 20 is planar and extends horizontally. It extends at a height between 80 cm and 1.3 m above the island 8 and can thus possibly be used as a resting surface for receiving various objects: personal items of the operator which he can thus set down temporarily during the refueling of the tank of his truck, or other items. The pillar 12 extends in the rear of this upper surface 20. It is parallelepiped and has an upper front surface 30, an upper rear surface 32, and two upper side surfaces 34. The upper rear surface 32 is substantially aligned with the lower rear surface 18 and the inclined area 28 thereof. The upper side surfaces 34 also are substantially aligned with the side surfaces 22 of the base 10, but they have a much smaller width than the side surfaces of the base 10. The upper front surface 30 extends recessed towards the rear relative to the lower front surface 16. The upper rear surface 32, the upper front surface 30, and the upper side surfaces 34 extend all four vertically.

The awning 14, supported by the pillar 12, is made of two parts, a rear part 36 and a front portion 38.

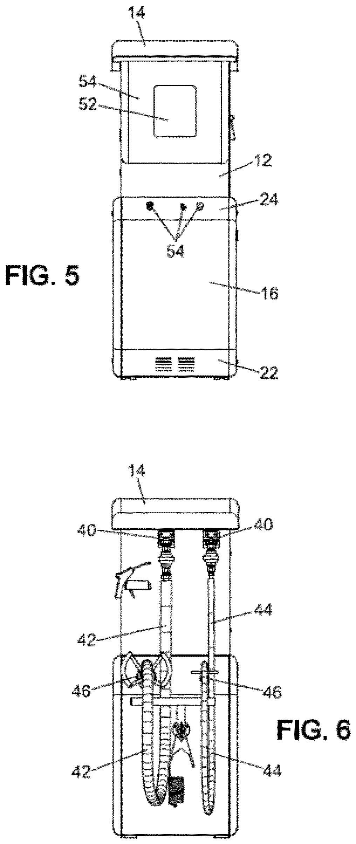

The rear part 36 of the awning 14 forms an overhang towards the rear of the pillar 12 which supports, on the lower surface thereof, two couplers 40 (Figures 4 and 6, in particular). A first coupler 40 is connected to a filling pipe 42, and the second coupler 40 is connected to a vapor collection pipe 44. Each coupler 40 can advantageously be a pivoting coupler (obviously sealing) provided for operating at extremely low temperatures corresponding to the temperatures of the cryogenic liquids. Such a pivoting coupler avoids unnecessary twisting of the corresponding pipe. Each coupler can also advantageously be provided with a vapor detection system and/or with a temperature sensor for detecting a leak.

Each of these pipes has a proximal end connected to a coupler 40 and a distal end connected to a connector 46. Each connector 46 is placed in a rest position in an accommodation that leads into the inclined area 28 of the lower rear surface 18. Each accommodation has a cylindrical shape (with circular cross section or other) and extends perpendicularly to the inclined area 28. Each accommodation is inclined downward at an angle of approximately 10° (between 0° and 45°, preferably between 0° and 30°) relative to the horizontal.

The front portion 38 of the awning 14 extends above the base 10 which it covers. In the embodiment illustrated, it is used together with the pillar 12 as support for a housing 48. In contrast to the pillar 12, the housing 48 has a façade 50 in which a screen 52 is integrated. The latter is oriented forward, that is to say away from the pillar 12 and the rear surface of the distribution station (formed by the lower rear surface 18 and the upper rear surface 32).

The housing 48 has dimensions such that, on the one hand, the façade 50 is at a distance from the pillar 12, and, on the other hand, a free space remains between the base 10 and, more precisely, the upper surface 20 of the base 10 and the housing 48. In this manner, the screen 52 is thermally insulated from the cryogenic liquid delivered by the distribution station. Indeed, this cryogenic liquid circulates in the base 10 and in the pillar 12 before being delivered by the filling pipe 42.

The screen 52 is located above the strip 24, or slightly offset towards the rear of this strip 24. In the embodiment example illustrated, this strip 24 has three buttons 54, a first button 54, for example, an emergency stop button which is usually required by law, a second selection button, and a third button for controlling the distribution of cryogenic liquid. This third button is used advantageously as start, stop and safety (dead man's) button. It is provided that a cryogenic liquid filling sequence starts when the operator 2 presses this third button 54 and stops as soon as this button is released. The screen 52 and the corresponding façade 50 are inclined so that, when the operator 2 faces the screen 52 and has access to the buttons 54, he can see the information displayed on the screen 52.

To carry out the filling of a tank, for example, the tank of the truck 4 (Figures 1 and 2), the operator 2, after having positioned his truck 4 along the island 8, connects the filling pipe 52 and, if applicable, the vapor collection pipe 44, to the tank of his truck 4. This step is illustrated in Figure 1.

Next, the operator 2 moves to face the screen 52 and the buttons 54 and monitors the filling of his tank. Here, one notes that all the buttons 54 are grouped together on the strip 24 and are thus all in the same area, arranged the opposite side from - relative to the distribution station 6 - the filling area. Indeed, the pipes are arranged in the rear of the distribution station 6, while the buttons 54 and the monitoring screen 52 are in front of the distribution station 6. Thus, during the filling of his tank, the operator 2, who has to press the third button 54 for the cryogenic liquid to fill his tank, is at a distance from the pipes which become cold during the filling operation. However, although he is at a distance from this filling area, he is naturally turned towards said filling pipe and is able to monitor the filling quite well. The screen 52 is arranged substantially perpendicularly to the lane in which the truck 4 is located. In an embodiment variant, one could consider placing the screen on a support that would be independent of the base 10 of the distribution station.

Although a single button is used for controlling the start of the filling sequence and the stopping of the filling sequence (by releasing this button), a system that automatically stops the filling when the tank is full is also provided, as is known in the prior art for cryogenic liquid distribution stations.

The second button, or selection button, makes it possible to select, for example, a type of cryogenic liquid in the case in which the distribution of several different liquids is provided for, for example. This second button can also be used to validate selections offered on the screen 52.

Various types of information can be displayed on the screen 52. Thus, the latter can indicate the quantity of liquid delivered, information on the liquid distributed, its price, ..., but also on the ongoing distribution: good connection of the filling pipe, filling percentage, request for disconnection of the pipes, error messages, .... As mentioned above, the screen 52 is arranged so that the operator 2 perfectly sees the information displayed on the screen 52 perfectly when he presses the third button 54, which serves as "dead man's" button.

In summary, from his position facing the screen 52, the operator 2 has easy accesses to the "dead man's" button and controls the filling of the tank, on the one hand, by his action on this button, and, on the other hand, by having a good view onto both the filling area and the screen 52.

As is apparent from the preceding description, the filling pipe 42 and the vapor collection pipe 44 are connected vertically, that is to say their proximal end, on the side of the distribution station 6 itself, extends vertically downward. This configuration is advantageous, since it makes it possible to limit the weight of the pipe to be carried and facilitates the task of the operator 2 during an operation of connection and disconnection of the pipes to/from his tank. In addition, due to the coupling at a height and the proposed configuration (both pipes on the same surface of the distribution station corresponding here to the rear surface), the operator does not need to step over the pipes during operations of connection and disconnection to/from the tank of the truck 4.

The fact that the pipes are connected vertically (proximal end vertical) makes it possible to increase the useful life of the pipes by limiting their wear, since the pipes are bent with larger radii of curvature, bending being a cause of wear. This also makes it possible to limit contact of the pipes with the ground, which is another source of wear of the pipes.

In addition, the person skilled in the art understands, in particular from Figures 1 and 2, that the truck 4 can be parked on either side of the island 8 supporting the distribution station 6. Thus, during an operation of filling a tank of a truck 4, another truck can already be parked on the other side of the island in order to get ready to fill up the tank with cryogenic fluid (LNG, for example). The truck can possibly arrive from the opposite direction.

The connectors 46, in rest position, are each arranged in an accommodation leading into the inclined area 28. It is possible to provide for equipping each of these connectors with an electromechanical device that detects whether the connector is in the hands of the operator 2 or rests on the ground.

Various devices can be provided alone or in combination (juxtaposition) in the accommodations of the connectors 46. These accommodations can receive, for example, a locking device for maintaining each connector. A system for cleaning with air or nitrogen can also be provided. Thus, the operator does not need to carry out this cleaning manually. A cleaning can also be provided each time before a filling a tank and after a filling. A heating device can also be installed, in particular, at the site of the connector of the filling pipe, in order to prevent icing of the corresponding connector.

In the distribution station 6 described above and illustrated in the drawing, a cold area and a hot area are provided. The cold area corresponds to the various portions that are in more or less direct contact with the cryogenic liquid distributed. This corresponds mainly to the base of the distribution station and to its pillar. The hot area, located, in particular, at the site of the housing 48, is thermally insulated from the cold area and receives the screen 52 as well as the various electronic components for the control and monitoring of the distribution station 6. In this housing 48, the temperature corresponds substantially to the ambient temperature.

With a distribution station as described above, the distribution of cryogenic liquid, for example, LNG (Liquefied Natural Gas), is simplified for an operator. The proposed station is ergonomically improved in comparison to the stations known from the prior art.

First of all, the operator can refuel a truck on either side of the distribution station. Next, after an operation of connection of the distribution station to the tank to be refueled, the operator moves in front of the screen and is then facing the control button for controlling the distribution of cryogenic liquid. He is then at a distance from the tank and the pipes, but he can observe the filling operation very well and at the same time see the monitoring screen.

The proposed structure makes it possible to facilitate the manipulation of the pipes. Due to their "vertical" connection, the pipes are less heavy for the operator during the connection to the tank and during their return to the distribution station. The control panel is also advantageously simplified by limiting the number of buttons.

Naturally, the present invention is not limited to the preferred embodiment which has been described above and which is represented in the drawing or to the mentioned variants. It also concerns all the embodiments available to the person skilled in the art in the context of the following claims.

## Claims

1. A distribution station (6) for a cryogenic liquid comprising a monitoring screen (52), at least one control button (54) arranged in a manner that it is accessible to a person facing the screen, and a filling pipe (42),
**characterized in that** the filling pipe (42) extends out of the station from a surface referred to as a rear surface of the distribution station, **in that** the monitoring screen (52) is arranged substantially parallel to the rear surface (18, 32) and oriented away from this rear surface.

2. The distribution station according to claim 1, **characterized in that** all the control buttons (54) are grouped together.

3. The distribution station according to either claim 1 or claim 2, **characterized in that** it comprises only a single control button (54) for the filling sequence, associated with distribution means of the electric valve and/or pump type, as well as control means such that, when the button is released, the distribution means are at rest, whereas, when the button is pressed, the distribution means supply the filling pipe with cryogenic liquid in accordance with a filling sequence.

4. The distribution station according to any one of claims 1 to 3, **characterized in that** the rear surface (18, 32) has an upper rim (36) provided with a coupler (40) that receives a proximal end of the filling pipe (42), and with a coupler (40) that receives a proximal end of a vapor collection pipe (44), the couplers (40) being implemented so that the proximal end of the filling pipe and the proximal end of the vapor collection pipe extend substantially vertically.

5. The distribution station according to claim 4, **characterized in that** the filing pipe (42) and the vapor collection pipe (44) are each provided at their distal end with a connector (46), and **in that** the rear surface (18, 32) has two accommodations, one for each of said connectors, each accommodation having a substantially cylindrical shape and being oriented downward at an inclination angle between 0 and 45°.

6. The distribution station according to claim 5, **characterized in that** each accommodation is provided with a locking device making it possible to maintain a connector (46) inside the accommodation thereof.

7. The distribution station according to either claim 5 or claim 6, **characterized in that** the accommodation of the connector (46) of the filling pipe (42) is provided with heating means.

8. The distribution station according to any one of claims 5 to 7, **characterized in that** the accommodation of the connector (46) of the filling pipe (42) is provided with cleaning means.

9. The distribution station according to any one of claims 1 to 8, **characterized in that** it comprises:
- a lower base (10) having a height between 0.8 and 1.3 m with a first surface referred to as lower rear surface (18), a second surface referred to as lower front surface (160, a third surface referred to as upper surface (20) and two surfaces referred to as lower side surfaces (22),
- a pillar (12) extending vertically from the upper surface (20) and having a surface extending the lower rear surface (18) of the lower base (10) towards the top, and
- an awning (14) supported by the pillar (12) and extending from said pillar towards the front and towards the rear so as to form, towards the rear, a rim (36), and, towards the front, a roof (38) covering the lower base.

10. The distribution station according to claim 9, **characterized in that** the roof (32) covering the lower base supports a housing (38) having a surface referred to as upper front surface in which the monitoring screen (52) is inserted, and **in that** a free space is produced between said housing and the upper surface of the lower base.

11. The distribution station according to either claim 9 or claim 10, **characterized in that** the lower front surface (16) has an inclined plane adjacent to the upper surface (20) of the lower base (10), and **in that** the control buttons (54) of the distribution station are grouped together therein.

## Patentansprüche

1. Verteilerstation (6) für eine kryogene Flüssigkeit, umfassend einen Überwachungsbildschirm (52), mindestens einen Schaltknopf (54), der so angeordnet ist, dass er für eine dem Bildschirm zugewandte Person zugänglich ist, und ein Füllrohr (42),
**dadurch gekennzeichnet, dass** sich das Füllrohr (42) aus der Station heraus von einer Fläche erstreckt, die als die Rückfläche der Verteilerstation bezeichnet wird, dadurch, dass der Überwachungsbildschirm (52) im Wesentlichen parallel zu der Rückfläche (18, 32) angeordnet und von dieser Rückfläche weg ausgerichtet ist.

2. Verteilerstation nach Anspruch 1, **dadurch gekennzeichnet, dass** alle Schaltknöpfe (54) zusammen angeordnet sind.

3. Verteilerstation nach Anspruch 1 oder 2, **dadurch gekennzeichnet, dass** sie nur einen einzelnen Schaltknopf (54) für die Füllsequenz umfasst, der einer Verteilereinheit der Art elektrisches Ventil und/oder elektrische Pumpe sowie einer Steuereinheit zugeordnet ist, sodass, wenn der Knopf losgelassen wird, die Verteilereinheit ruht, wobei, wenn der Knopf gedrückt wird, die Verteilereinheit gemäß einer Füllsequenz das Füllrohr mit kryogener Flüssigkeit versorgt.

4. Verteilerstation nach einem der Ansprüche 1 bis 3, **dadurch gekennzeichnet, dass** die Rückfläche (18, 32) einen oberen Rand (36) aufweist, der mit einer Kupplung (40) ausgestattet ist, die ein proximales Ende des Füllrohrs (42) aufnimmt, und mit einer Kupplung (40), die ein proximales Ende eines Dampfsammelrohrs (44) aufnimmt, wobei die Kupplungen (40) so umgesetzt sind, dass sich das proximale Ende des Füllrohrs und das proximale Ende des Dampfsammelrohrs im Wesentlichen vertikal erstrecken.

5. Verteilerstation nach Anspruch 4, **dadurch gekennzeichnet, dass** das Füllrohr (42) und das Dampfsammelrohr (44) an ihrem distalen Ende jeweils mit einem Anschluss (46) ausgestattet sind, und dadurch, dass die Rückfläche (18, 32) zwei Aufnahmen aufweist, eine für jeden der Anschlüsse, wobei jede Aufnahme eine im Wesentlichen zylindrische Form aufweist und mit einem Neigungswinkel zwischen 0 und 45° nach unten ausgerichtet ist.

6. Verteilerstation nach Anspruch 5, **dadurch gekennzeichnet, dass** die Aufnahmen jeweils mit einer Arretierung ausgestattet sind, wodurch es ermöglicht wird, einen Anschluss (46) in seiner Aufnahme zu halten.

7. Verteilerstation nach Anspruch 5 oder Anspruch 6, **dadurch gekennzeichnet, dass** die Aufnahme des Anschlusses (46) des Füllrohrs (42) mit einer Heizeinheit ausgestattet ist.

8. Verteilerstation nach einem der Ansprüche 5 bis 7, **dadurch gekennzeichnet, dass** die Aufnahme des Anschlusses (46) des Füllrohrs (42) mit einer Reinigungseinheit ausgestattet ist.

9. Verteilerstation nach einem der Ansprüche 1 bis 8, **dadurch gekennzeichnet, dass** sie Folgendes umfasst:
- eine untere Basis (10), die eine Höhe zwischen 0,8 und 1,3 m aufweist, wobei eine erste Fläche als untere Rückfläche (18) bezeichnet wird, eine zweite Fläche als untere Vorderfläche (160) bezeichnet wird, eine dritte Fläche als obere Fläche (20) bezeichnet wird und zwei Flächen als untere Seitenflächen (22) bezeichnet werden,
- eine Säule (12), die sich vertikal von der oberen Fläche (20) erstreckt und eine Fläche aufweist, die die untere Rückfläche (18) der unteren Basis (10) nach oben verlängert, und
- ein Vordach (14), das von der Säule (12) abgestützt wird und sich von der Säule nach vorne und hinten erstreckt, um nach hinten einen Rand (36) und nach vorne ein Dach (38) zu bilden, das die untere Basis überdacht.

10. Verteilerstation nach Anspruch 9, **dadurch gekennzeichnet, dass** das Dach (32), das die untere Basis überdacht, ein Gehäuse (38) abstützt, das eine Fläche aufweist, die als obere Vorderfläche bezeichnet wird, in der der Überwachungsbildschirm (52) eingesetzt ist, und dadurch, dass zwischen dem Gehäuse und der oberen Fläche der unteren Basis ein freier Raum geschaffen wird.

11. Verteilerstation nach Anspruch 9 oder Anspruch 10, **dadurch gekennzeichnet, dass** die untere Vorderfläche (16) eine abgeschrägte Ebene neben der oberen Fläche (20) der unteren Basis (10) aufweist, und dadurch, dass die Schaltknöpfe (54) der Verteilerstation darin zusammen angeordnet sind.

## Revendications

1. Station de distribution (6) pour un liquide cryogénique comprenant un écran de surveillance (52), au moins un bouton de commande (54) disposé de telle manière qu'il soit accessible à une personne faisant face à l'écran, et un tuyau de remplissage (42),
**caractérisée en ce que** le tuyau de remplissage (42) s'étend en dehors de la station depuis une face dite face arrière de la station de distribution, **en ce que** l'écran de surveillance (52) est disposé de manière sensiblement parallèle à la face arrière (18, 32) et orienté à l'opposé de cette face arrière.

2. Station de distribution selon la revendication 1, **caractérisée en ce que** tous les boutons de commande (54) sont regroupés.

3. Station de distribution selon soit la revendication 1, soit la revendication 2, **caractérisée en ce qu'**elle comprend uniquement un seul bouton de commande (54) pour la séquence de remplissage, associée à des moyens de distribution du type d'électrovanne et/ou de pompe, ainsi qu'à des moyens de commande de telle sorte que, lorsque le bouton est relâché, les moyens de distribution ne soient pas au repos tandis que, lorsque le bouton est enfoncé, les moyens de distribution alimentent le tuyau de remplissage en liquide cryogénique en fonction d'une séquence de remplissage.

4. Station de distribution selon l'une quelconque des revendications 1 à 3, **caractérisée en ce que** la face arrière (18, 32) comporte un rebord supérieur (36) pourvu d'un coupleur (40) qui reçoit une extrémité proximale du tuyau de remplissage (42), et d'un coupleur (40) qui reçoit une extrémité proximale d'un tuyau de collecte de vapeur (44), les coupleurs (40) étant mis en oeuvre de telle sorte que l'extrémité proximale du tuyau de remplissage et l'extrémité proximale du tuyau de collecte de vapeur s'étendent sensiblement verticalement.

5. Station de distribution selon la revendication 4, **caractérisée en ce que** le tuyau de remplissage (42) et le tuyau de collecte de vapeur (44) sont chacun pourvus, au niveau de leur extrémité distale, d'un connecteur (46) et **en ce que** la face arrière (18, 32) comporte deux logements, un pour chacun desdits connecteurs, chaque logement ayant une forme sensiblement cylindrique et étant orienté vers le bas selon un angle d'inclinaison compris entre 0 et 45°.

6. Station de distribution selon la revendication 5, **caractérisée en ce que** chaque logement est pourvu d'un dispositif de verrouillage permettant de maintenir un connecteur (46) à l'intérieur de son logement.

7. Station de distribution selon soit la revendication 5, soit la revendication 6, **caractérisée en ce que** le logement du connecteur (46) du tuyau de remplissage (42) est pourvu de moyens de chauffage.

8. Station de distribution selon l'une quelconque des revendications 5 à 7, **caractérisée en ce que** le logement du connecteur (46) du tuyau de remplissage (42) est pourvu de moyens de nettoyage.

9. Station de distribution selon l'une quelconque des revendications 1 à 8, **caractérisée en ce qu'**elle comprend :
- une base inférieure (10) ayant une hauteur comprise entre 0,8 et 1,3 m avec une première face dite face arrière inférieure (18), une deuxième face dite face avant inférieure (160), une troisième face dite face supérieure (20) et deux faces dites faces latérales inférieures (22),
- un pilier (12) s'étendant verticalement depuis la face supérieure (20) et ayant une face prolongeant la face arrière inférieure (18) de la base inférieure (10) vers le haut, et
- un auvent (14) supporté par le pilier (12) et s'étendant depuis ledit pilier vers l'avant et vers l'arrière de sorte à former, vers l'arrière, un rebord (36) et, vers l'avant, un toit (38) couvrant la base inférieure.

10. Station de distribution selon la revendication 9, **caractérisée en ce que** le toit (32) couvrant la base inférieure supporte un boîtier (38) ayant une face dite face avant supérieure dans lequel l'écran de surveillance (52) est inséré, et **en ce qu'**un espace libre est produit entre ledit boîtier et la face supérieure de la base inférieure.

11. Station de distribution selon soit la revendication 9, soit la revendication 10, **caractérisée en ce que** la face avant inférieure (16) présente un plan incliné adjacent à la face supérieure (20) de la base inférieure (10) et **en ce que** les boutons de commande (54) de la station de distribution sont regroupés à l'intérieur de cette dernière.
